Europäisches Patentamt

European Patent Office

Office européen des brevets

(19)

(11) Veröffentlichungsnummer : **0 113 915**
**B1**

(12) # EUROPÄISCHE PATENTSCHRIFT

(45) Veröffentlichungstag der Patentschrift :
19.10.88

(51) Int. Cl.⁴ : **B 23 H   5/04**, B 23 H   5/10

(21) Anmeldenummer : **83113084.4**

(22) Anmeldetag : **24.12.83**

(54) **Verfahren und Vorrichtung zur Bearbeitung von Oberflächen.**

(30) Priorität : **13.01.83 DE 3300938**

(43) Veröffentlichungstag der Anmeldung :
**25.07.84 Patentblatt 84/30**

(45) Bekanntmachung des Hinweises auf die Patenterteilung : **19.10.88 Patentblatt 88/42**

(84) Benannte Vertragsstaaten :
**DE FR GB IT**

(56) Entgegenhaltungen :
**GB-A- 2 033 799**
**US-A- 3 267 018**
**US-A- 3 506 558**

(73) Patentinhaber : **Nagel, Peter**
**Taläckerstrasse 22**
**D-7442 Neuffen (DE)**

**Nagel, Wolf**
**Weinbergstrasse 17**
**D-7440 Nürtingen-Zizishausen (DE)**

(72) Erfinder : **Nagel, Peter**
**Taläckerstrasse 22**
**D-7442 Neuffen (DE)**
Erfinder : **Nagel, Wolf**
**Weinbergstrasse 17**
**D-7440 Nürtingen-Zizishausen (DE)**

(74) Vertreter : **Patentanwälte Ruff und Beier**
**Neckarstrasse 50**
**D-7000 Stuttgart 1 (DE)**

## Beschreibung

Die Erfindung betrifft ein Verfahren zur Bearbeitung von Oberflächen, bei dem nach der Grobbearbeitung eine Nachbearbeitung durch Elektroerodieren und eine anschließende Feinbearbeitung durch Honen durchgeführt wird.

Es ist bereits bekannt (GB-A-2 033 799), die Oberfläche von Werkstücken durch ein Elektroerodieren nachzubehandeln und die dadurch erzeugte aus einander überlappenden Kratern gebildete Oberflächenformation durch ein späteres Abtragen mit Hilfe von Schleifsteinen o. dgl. zu glätten. Beide Nachbehandlungsarten werden getrennt voneinander mit Hilfe der gleichen Vorrichtung durchgeführt. Die anschließende schleifende Bearbeitung verwendet hierzu ein Spezialwerkzeug, bei dem einzelne federnd aufgehängte Schleifsteine gegen die zu bearbeitende Oberfläche geschlagen werden.

Ebenfalls bekannt sind elektrolytische Honwerkzeuge (US-A-3 506 558), mit deren Hilfe ein gleichzeitiges Honen und elektrolytisches Abtragen mit einem Werkzeug durchgeführt werden kann.

Beim elektrolytischen Honen wird jedoch im Gegensatz zum Elektroerodieren ein möglichst großer Werkstoffabtrag in möglichst kurzer Zeit bewirkt. Zu diesem Zweck sind die Elektroden segmentartig ausgebildet, so daß sie sich über einen möglichst großen Umfangsbereich erstrecken.

Bei einem weiteren elektrolytischen Hongerät (US-A-3 267 018) ist der gesamte Werkzeugkörper aus Metall als Elektrode ausgebildet. Hiermit soll wiederum die Geschwindigkeit, Wirksamkeit und Qualität des Abtrageprozeßes verbessert werden.

Beim Honen von Gußeisen, insbesondere von Zylinderlaufflächen, das man wegen der größeren Standzeiten heute ausschließlich mit Diamantoder CBN- Honleisten durchführt, hat sich herausgestellt, daß dabei ein Nachteil auftritt, der sich bei schnell laufenden Motoren immer stärker auswirkt. In den Mikrostrukturen diamantgehonter Kolbenlaufbahnen aus Gußeisen zeigen sich nämlich in der obersten Werkstoffschicht gewisse Verschuppungen, also Grenzschichtverschiebungen, die heute in der Fachwelt als « Blechmantel » bezeichnet werden. Man kann diese Verschuppungen zwar je nach Anpressdruck der Honleisten und Weichheit der metallischen Bindung in gewissen Grenzen beeinflussen, sie aber im wesentlichen nicht verhindern. Das hat den Nachteil, daß sich die Zungen der Schuppen während des Laufens des Motors ablösen und dadurch Kolbenfresser oder brandige Kolbenringe verursachen. Durch die Verschuppung werden gleichzeitig die angeschnittenen Graphitlamellen des Gußes verquetscht. Die sogenannten Notlaufeigenschaften des Gußes gehen damit verloren, weil die Graphitlamellen abgedeckt sind. Diese Erscheinung führt außerdem zu höheren Reibkräften für die Kolbenbewegung und damit zu einem höheren Öl- und Kraftstoffverbrauch.

Aufgrund der großen Vorteile der Diamant- und CBN- Honleisten kann auf diese nicht verzichtet werden. Daher werden die Nachteile der Verschuppung durch den Einsatz von teueren Chrom-Molybdän- legierten Kolbenringen ausgeglichen.

Der Erfindung liegt die Aufgabe zugrunde, ein Verfahren und eine Vorrichtung der eingangs genannten Art zu schaffen, mit deren Hilfe sich eine genauere Bearbeitung der Oberflächen unter gleichzeitiger Verbesserung der Notlaufeigenschaften durchführen läßt, womit die Verschleißfestigkeit von Motoren erhöht werden und die Reparaturanfälligkeit verringert werden soll. Darüber hinaus soll ein geringerer Ölverbrauch, kürzere Einlaufzeiten, weniger Kraftstoffverbrauch und vor allem die Einsatzmöglichkeit von einfacheren und dadurch billigeren Kolbenringen ermöglicht werden.

Zur Lösung dieser Aufgabe ist erfindungsgemäß bei dem Verfahren vorgesehen, daß zur Bearbeitung von Zylinderlaufflächen diese mit Hilfe eines mindestens eine Elektrode und mindestens einen Abstandshalter aufweisenden drehangetriebenen Werkzeugs bearbeitet werden, wobei die Erodierung in einem schmalen sich über die Oberfläche bewegenden Bereich erfolgt, hinter dem der Abstandshalter über die zu bearbeitende Oberfläche bewegt wird, wobei diese an der Oberfläche reibt. Durch diese Bearbeitung sollen Tragflächen geschaffen werden, die von Kratern durchzogen werden.

Dadurch wird nicht nur die Verblechung der Oberflächen vermieden, sondern insbesondere auch die Vorteile des Plateauhonens beibehalten. Die kraterförmigen Vertiefungen entsprechen den tieferen Riefen beim Plateauhonen. Die nach der elektrischen Erosion durchgeführte Feinhonbearbeitung ist aufgrund ihrer milderen Wirkung nicht in der Lage, eine Verschuppung bzw. einen Blechmantel zu erzeugen.

Da die Oberfläche in einem schmalen sich über diesen bewegenden Bereich erodiert wird, wird ein definiertes Abreißen der Funken erreicht, so daß man aufgrund der Auswahl der Bewegungsgeschwindigkeit die Bearbeitungsdauer der Oberfläche bestimmen kann.

Der Abstandshalter, der an der Oberfläche reibt, sorgt dafür, daß die Krater nicht zu groß werden, da sie gleich nach dem Erstellen wieder eingebracht werden. Der Abstandshalter kann ebenfalls zum Abreißen der Funken dienen.

Die Erfindung schlägt ebenfalls eine Vorrichtung zur Bearbeitung von zylindrischen Bohrungen mit einem drehantreibbaren und ggf. axial hin- und hergehend antreibbaren, mit einer Verbindungseinrichtung zur Befestigung von einer üblichen Honmaschine versehenen Werkzeugkörper mit mindestens einer Elektrode vor, bei der erfindungsgemäß der Werkzeugkörper mindestens einen Abstandshalter aufweist, der mindestens im Berührbereich mit der zu bearbeitenden Fläche mit einer Isolationsauflage in Form einer keramischen Leiste versehen ist, die an der zu bearbeitenden Oberfläche eine Reibbearbeitung durchführt, wobei die Elektrode leistenartig ausgebildet ist und mit einer Spannungsquelle zur Erzeugung von Funkenüberschlägen verbindbar ist.

Dabei kann mit Vorteil die Stromzuführung zu der Elektrode über den aus leitendem Werkstoff bestehenden Werkzeugkörper erfolgen. Der Werkzeugkörper kann auch in einer hin- und hergehenden Bewegung antreibbar ausgebildet sein. Beide Bewegungen können gleichzeitig durchgeführt werden. Es ist aber ebenfalls mit Vorteil möglich, daß die beiden Bewegungsarten hintereinander erfolgen.

Da der Werkzeugkörper eine Verbindungseinrichtung zur Befestigung an einer üblichen Honmaschine aufweist, kann eine herkömmliche Vorrichtung verwendet werden, um nach der Vorbereitung, beispielsweise einem Vorhonen, die Elektroerosion durchzuführen. Dabei hat das Werkzeug die gleichen Freiheitsgrade wie ein übliches Honwerkzeug.

In besonderer Ausgestaltung weist der Werkzeugkörper mehrere parallel zueinander verlaufende und über den Umfang vorzugsweise gleichmäßig verteilte Elektroden auf. Dies führt zu einer Beschleunigung des Verfahrens.

Es kann erfindungsgemäß vorgesehen sein, daß der Werkzeugkörper mehrere parallel zueinander und über den Umfang vorzugsweise gleichmäßig verteilte Abstandshalter aufweist. Da es sich bei der zu bearbeitenden Oberfläche um eine Bohrung handelt, können die Abstandshalter zur Zentrierung des Werkzeugkörpers dienen, was nicht nur zu einer gleichmäßigen und guten Bearbeitung der Oberfläche, sondern auch zu einer guten Positionierung der Elektroden führt.

Diese bestehen vorzugsweise aus Kupfer, während der Werkzeugkörper aus Metall besteht. Dadurch ist eine gute Stromleitung gegeben.

In Weiterbildung kann vorgesehen sein, daß die Abstandshalter und/oder die Elektroden gemeinsam oder getrennt zustellbar sind. Damit wird es möglich, die von der Erfindung vorgeschlagene Vorrichtung auf herkömmliche Maschinen zu verwenden, da ein Einführen und anschließendes Zustellen möglich ist.

Die Erfindung sieht weiterhin vor, daß die Elektroden in Schlitzen im Werkzeugkörper geführt sein können. Aufgrund dieser Ausbildung ergibt sich eine besonders gute Stromleitung zwischen dem Werkzeugkörper und den Elektroden.

Die Erfindung schlägt weiterhin vor, daß zwischen je zwei Elektroden mittig ein Abstandshalter angeordnet ist. Diese Möglichkeit der Zentrierung und Ausrichtung ergibt ein gut zentriertes und rundes Umlaufen.

Es ist ebenfalls mit Vorteil möglich, daß auf Beiden Seiten mindestens einer, vorzugsweise aller Elektroden je ein Abstandshalter ohne Zwischenraum angeordnet ist. In diesem Fall sind die Abstandshalter also direkt neben den Elektroden angeordnet, und können beispielsweise mit diesen zusammem zustellbar sein.

Ebenfalls möglich ist es, daß auf beiden Seiten mindestens eines, vorzugsweise aller Abstandshalter je eine Elektrode ohne Zwischenraum angeordnet ist. Auch dies ist eine günstige Möglichkeit, die die Vorrichtung u. U. stark vereinfachen kann.

Die Erfindung schlägt weiterhin vor, daß der Werkzeugkörper als Vollelektrode mit zustellbaren Abstandshaltern ausgebildet sein kann. In diesem Fall würden die Zustelleinrichtungen für die Elektroden nicht mehr erforderlich sein.

Weitere Merkmale, Einzelheiten und Vorzüge der Erfindung ergeben sich aus der folgenden Beschreibung bevorzugter Ausführungsformen sowie anhand der Zeichnung.

Hierbei zeigen :

Fig. 1 einen Längsschnitt eines erfindungsgemäßen Erosionswerkzeuges ;

Fig. 2 einen Schnitt etwa nach Linie II-II in Fig. 1 ;

Fig. 3 bis 5 stark vereinfachte Ansichten entsprechend der Fig. 2 durch angeänderte Ausführungsformen der Erfindung.

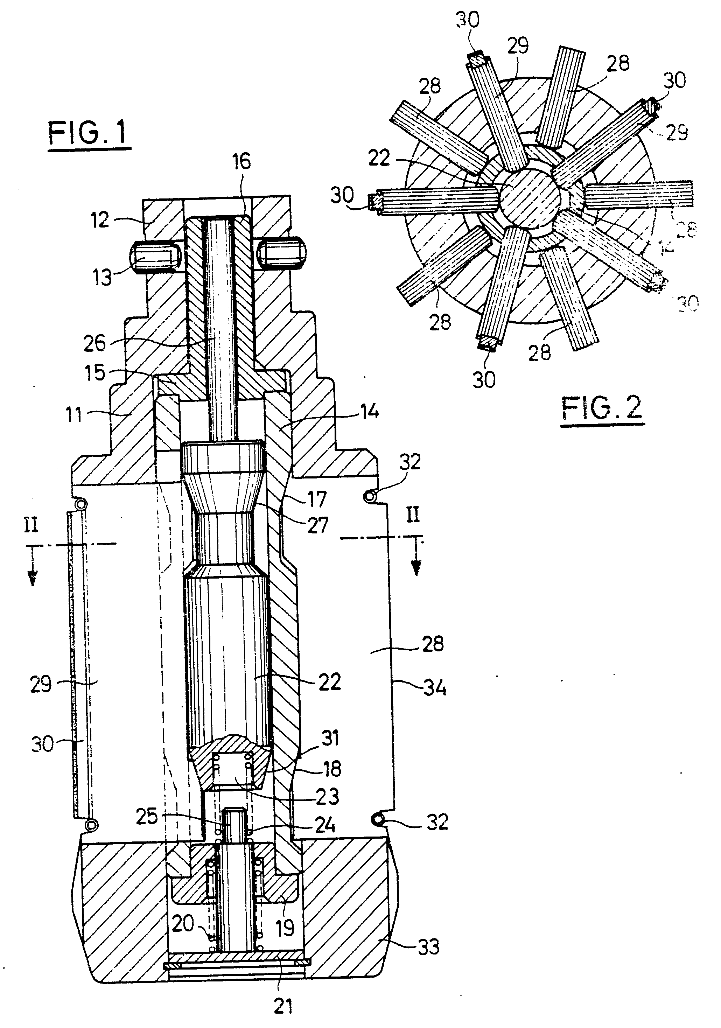

Das in Fig. 1 dargestellte Erosionswerkzeug enthält einen Werkzeugkörper 11, der an seiner Oberseite einen Zapfenfortsatz 12 mit seitlichen Stiftvorsprüngen 13 zum Einsetzen in eine Antriebsvorrichtung einer Honmaschine aufweist.

In Axialrichtung des Werkzeugkörpers 11 verschiebbar angeordnet ist ein Rohr 14, das über einen Tellerflansch 15 mit eimem weiteren Rohr 16 verbunden ist. Das Rohr 14 weist an seiner Außenseite zwei kegelstumpfartige Flächen 17, 18 auf, die rings um die Außenseite des Rohres 14 verlaufen. An der Unterseite endet das Rohr 14 in einem Deckel 19, der mit Hilfe einer Schraubenfeder 20, die sich auf einer Scheibe 21 abstützt, nach oben gedrückt wird.

Innerhalb des Rohres 14 ist ein Dorn 22 angeordnet, der in seiner Unterseite eine Ausnehmung 23 aufweist, in die eine Schraubenfeder 24 eingreift. Die Schraubenfeder 24 wird durch einen Zapfen 25 gesichert. Die Schraubenfeder 24 drückt den Dorn 22 nach oben. Der Dorn 22 besitzt an seiner Oberseite einen schaftartigen Fortsatz 26, der an der Oberseite des Werkzeuges aus dem Rohr 16 herausblickt.

Der Dorn 22 besitzt ebenfalls eine umlaufende Keilfläche 27.

In radialen Längsschlitzen des Werkzeugkörpers 11, siehe insbesondere Fig. 2, sind abwechselnd Elektroden 28 und Abstandshalter 29 angeordnet. Die Abstandshalter 29 besitzen an ihrer Außenseite eine Keramikleiste 30. Übt man auf die Oberseite des Rohres 16 eine Kraft aus, so bewirken die Schrägflächen 17, 18 an dem Rohr 14 zusammen mit ähnlichen Schrägflächen an der Elektrode 28 ein Verschieben der Elektrode nach außen.

In ähnlicher Weise führt ein Druck auf den zapfenartigen Fortsatz 26 über die Schrägflächen 27 und 31 eine Kraft auf die Abstandshalter 29 aus, die dann ebenfalls nach außen verschoben werden. Alle Elektroden 28 und Abstandshalter 29 sind durch zwei Ringfedern 32 miteinander verbunden, die sich der Bewegung von Elektroden 28 und Abstandshalter 29 nach außen entgegensetzen. Läßt daher der Druck auf den Fortsatz 26 und das Rohr 16 nach, so bewirken die Rückstellfedern 20 und 24 eine Aufwärtsbewegung der beiden Teile, während die Elektroden 28 und Abstandshalter 29 durch die Ringfedern 32 zurückgeschoben werden.

Aus Fig. 2 ist zu sehen, daß insgesamt fünf Elektroden 28 und ebenfalls fünf Abstandshalter 29 vorhanden sind. Die Elektroden 28 sind vollständig aus Kupfer ausgebildet, sie werden von dem in dem Schnitt der Fig. 2 als Kreisring zu sehenden Rohr 14 mit den entsprechenden Schrägflächen beaufschlagt.

Die fünf Abstandshalter 29 besitzen jeweils an ihrer Außenkante eine Keramikleiste 30, die in an sich bekannter Art dort befestigt ist. Die Abstandshalter 29 liegen mit ihren jeweiligen Innenseiten an dem Dorn 22 an. In an sich bekannter Art lassen sich also sowohl die Elektroden 28 als auch die Abstandshalter 29 getrennt voneinander nach außen und innen verschieben.

Zum Durchführen des von der Erfindung vorgeschlagenen Verfahrens wird der Werkzeugkörper 11 nach Fig. 1 und 2 in eine Bohrung eingesetzt, wozu der Einführungskonus 33 dient. Anschließend werden die Abstandshalter 29 zugestellt, bis der Werkzeugkörper 11 in der zu bearbeitenden Bohrung zentriert ist. Danach werden die Elektroden 28 so weit zugestellt, bis sich der richtige Abstand zwischen der Außenkante 34 der Elektroden 28 und der zu bearbeitenden Oberfläche einstellt. Anschließend wird das Werkzeug in Drehung versetzt und unter Spannung gebracht, wobei der Strom durch das aus Metall bestehende Werkzeug direkt zu den Elektroden 28 und zu deren Außenkante 34 gelangt, wobei in die Bohrung zwischen den Werkzeugkörper 11 und die zu bearbeitende Oberfläche ein Dielektrikum in flüssiger Form eingebracht wird, was aufgrund der Größe des Werkzeugkörpers 11 möglich ist. Es entstehen Funkenüberschläge zwischen den Elektroden 28 und der zu bearbeitenden Oberfläche, die aufgrund des Weiterdrehens des Werkzeugkörpers 11 abreißen.

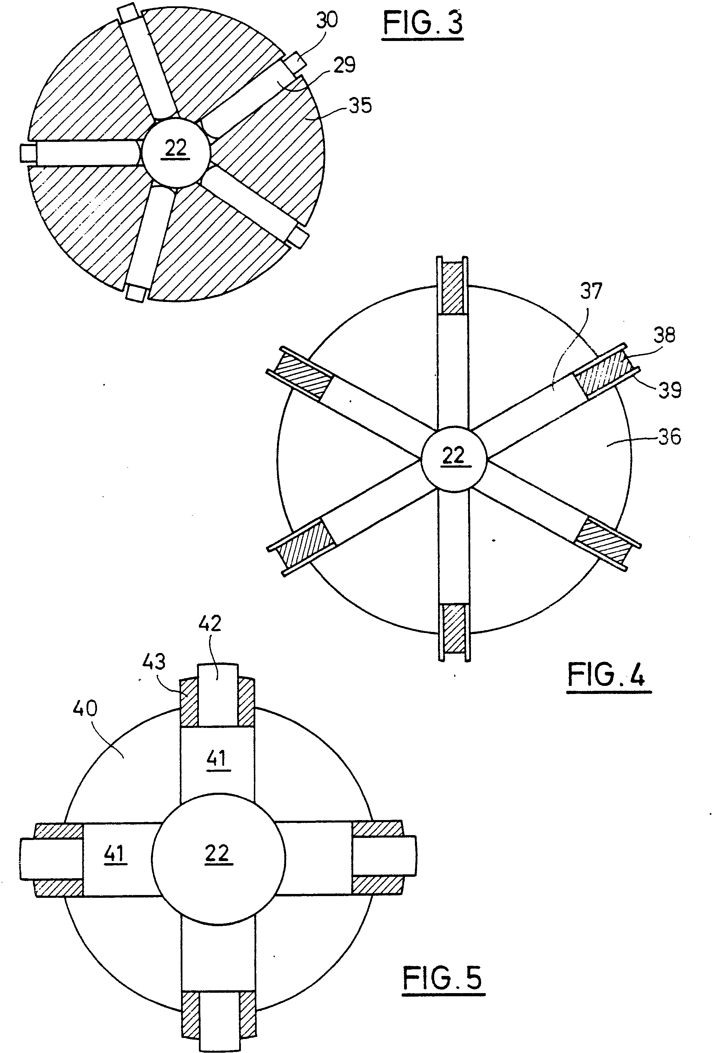

Fig. 3 zeigt eine Ausführungsform, bei der der Werkzeugkörper 35 als Vollelektrode ausgebildet ist, wobei zur Zentrierung dann jeweils die fünf Abstandshalter 29 mit ihren Keramikleisten 30 dienen. Die Zustellung erfolgt, wie bekannt, durch den Dorn 22. Diese Ausführungsform ist insbesondere dann von Vorteil, wenn Bohrungen mit immer der gleichen Größe bearbeitet werden müssen.

Bei der Ausführungsform nach Fig. 4 sind die Elektroden und die Abstandshalter kombiniert. Der Werkzeugkörper 36 besitzt insgesamt sechs Schlitze, in denen bewegliche Abstandshalter 37 eingesetzt sind. Die Abstandshalter 37 besitzen an ihrer Außenseite jeweils eine Elektrode 38, zu deren beiden Seiten die die eigentlichen Abstandshalter bildenden Keramikteile 39 angeordnet sind. Die Keramikteile 39 sind derart angeordnet, daß sie über die Außenfläche der Elektroden 38 um den für eine günstige Bearbeitung richtigen Abstand vorstehen. Wiederum lassen sich die Abstandshalter 37 durch den Dorn 22 verstellen.

Fig. 5 zeigt eine Ausführungsform, bei der in vier Schlitzen des Werkzeugkörpers 40 insgesamt vier Elemente 41 durch den Dorn 22 verstellbar angeordnet sind. An den Außenenden der Elemente 41 ist mittig eim Abstandshalter 42 angeordnet, zu dessen beiden Seiten jeweils dicht anliegend eine Elektrode 43 angebracht ist. Wiederum ist der Oberstand der Abstandshalter 42 gegenüber den Elektroden 43 derart gewählt, daß sich der für den jeweiligen Einsatzfall richtige Abstand ergibt. Auch diese erfindungsgemäß ausgebildete Vorrichtung besitzt den Vorteil, daß sie relativ einfach im Aufbau ist. Erfindungsgemäß kann auch vorgesehen sein, daß die Keramikleisten einen feinen Belag aus Diamant- oder Siliciumkörnern aufweisen können. In diesem Fall reiben die Keramikleisten bzw. die Abstandshalter über die zu bearbeitende Oberfläche, so daß mindestens ein Teil der feinen Nachbearbeitung von diesen Keramikleisten schon mit übernommen werden kann. Es ist ebenfalls möglich, wie von der Erfindung vorgesehen, daß der Werkzeugkörper zusätzlich zu den Elektroden und Abstandshaltern noch eigentliche Honleisten aufweist, die dann die Endbearbeitung übernehmen können.

Die Erfindung hat den großen Vorteil, daß als Dielektrikum, das beim Funkenerodieren erforderlich ist, Petroleum verwendet werden kann, das dem Honöl schon sehr ähnlich ist, so daß anschließend keine Waschoperation erforderlich ist.

**Patentansprüche**

1. Verfahren zur Bearbeitung von Oberflächen, bei dem nach der Grobbearbeitung eine Nachbearbeitung durch Elektroerodieren und eine Feinbearbeitung durch Honen durchgeführt wird, dadurch gekennzeichnet, daß zur Bearbeitung von Zylinderlaufflächen diese mit Hilfe eines mindestens eine Elektrode (28, 38, 43) und mindestens einen Abstandshalter (29, 37, 42) aufweisenden drehangetriebenen Werkzeugs bearbeitet werden, wobei die Erodierung in einem schmalen sich über die zu bearbeitende Oberfläche bewegenden Bereich erfolgt, hinter dem der Abstandshalter (29, 37, 42) über die zu bearbeitende Oberfläche bewegt wird, wobei dieser an der Oberfläche reibt.

2. Vorrichtung zur Bearbeitung von zylindrischen Bohrungen, mit einem drehantreibbaren und ggf. axial hin- und hergehend antreibbaren mit einer Verbindungseinrichtung zur Befestigung an einer üblichen Honmaschine versehenen Werkzeugkörper (11, 35, 36, 40) mit mindestens einer Elektrode (28, 38, 43), dadurch gekennzeichnet, daß die Elektrode (28, 38, 43) leistenartig ausgebildet und mit einer Spannungsquelle zur Erzeugung von Funkenüberschlägen verbindbar ist, und der Werkzeugkörper (11, 35, 36, 40) mindestens einen Abstandshalter (29, 37, 42) aufweist, der mindestens im Berührbereich mit der zu bearbeitenden Fläche mit einer Isolationsauflage in Form einer keramischen Leiste (30, 39) versehen ist, die an der zu bearbeitenden Oberfläche eine Reibbearbeitung durchführt.

3. Vorrichtung nach Anspruch 2, dadurch gekennzeichnet, daß der Werkzeugkörper (11, 35, 36, 40) mehrere etwa parallel zueinander verlaufende und über den Umfang gleichmäßig verteilte Elektroden (28, 38, 43) und Abstandshalter (29, 37, 42) aufweist.

4. Vorrichtung nach Anspruch 2 oder 3, dadurch gekennzeichnet, daß die Elektroden (28, 38, 43) aus Kupfer und der Werkzeugkörper (11, 35, 36, 40) aus Metall bestehen.

5. Vorrichtung nach einem der Ansprüche 2 bis 4, dadurch gekennzeichnet, daß die Elektroden (28, 38, 43) in Schlitzen im Werkzeugkörper (11, 35, 36, 40) geführt sind.

6. Vorrichtung nach einem der Ansprüche 2 bis 5, dadurch gekennzeichnet, daß die Abstandshalter (29, 37, 42) und die Elektroden (28, 38, 43) gemeinsam zustellbar sind.

7. Vorrichtung nach einem der Ansprüche 2 bis 5, dadurch gekennzeichnet, daß die Abstandshalter (29, 37, 42) und die Elektroden (28, 38, 43) getrennt zustellbar sind.

8. Vorrichtung nach Anspruch 6 oder 7, dadurch gekennzeichnet, daß zur Zustellung ein in zwei entgegengesetzten Richtungen betreibbarer elektronisch ansteuerbarer Schrittmotor vorgesehen ist.

9. Vorrichtung nach einem der Ansprüche 2 bis 8, dadurch gekennzeichnet, daß auf beiden Seiten aller Elektroden (38) je ein Abstandshalter ohne Zwischenraum angeordnet ist.

10. Vorrichtung nach einem der Ansprüche 2 bis 9, dadurch gekennzeichnet, daß auf beiden Seiten alle Abstandshalter (41) je eine Elektrode (43) ohne Zwischenraum angeordnet ist.

11. Vorrichtung nach einem der Ansprüche 2 bis 10, dadurch gekennzeichnet, daß der Werkzeugkörper (35) als Vollelektrode mit zustellbarem Abstandshalter (29) ausgebildet ist.

12. Vorrichtung nach einem der Ansprüche 2 bis 11, dadurch gekennzeichnet, daß die Länge der Elektroden (28, 38, 43) und der Abstandshalter (29, 37, 42) etwa der Länge der zu bearbeitenden Bohrung entspricht.

13. Vorrichtung nach einem der Ansprüche 2 bis 12, dadurch gekennzeichnet, daß die Abstandshalter (29, 37, 42) einen feinkörnigen Schneidbelag aus Silizium- oder Diamantkörnern aufweisen.

14. Vorrichtung nach einem der Ansprüche 2 bis 13, dadurch gekennzeichnet, daß der Werkzeugkörper zusätzlich zu den Elektroden (28, 38, 43) und den Abstandshaltern (29, 37, 42) Honleisten aufweist.

**Claims**

1. Method for the machining of surfaces, in which following the coarse machining there is a subsequent working by electroerosion and fine machining by honing, characterized in that for machining cylinder bores they are machined by a rotary driven tool having at least one electrode (28, 38, 43) and at least one spacer (29, 37, 42), erosion taking place in a narrow area moving over the surface to be machined behind which the spacer (29, 37, 42) is moved over the surface to be machined and rubs against the latter.

2. Device for machining cylindrical bores, with a rotary driven and optionally axially reciprocatably driveable tool body (11, 35, 36, 40) with a connecting means for fixing to a conventional honing machine and having at least one electrode (28, 38, 43), characterized in that the electrode (28, 38, 43) is constructed in strip-like manner and can be connected to a power supply for producing sparkovers and that the tool body (11, 35, 36, 40) has at least one spacer (29, 37, 42) which, at least in the contact area with the surface to be machined is provided with an insulating support in the form of a ceramic strip (30, 39), which carries out frictional working of the surface to be machined.

3. Device according to claim 2, characterized in that the tool body (11, 35, 36, 40) has a plurality of approximately parallel electrodes (28, 38, 43) and spacers (29, 37, 42) uniformly distributed over the circumference.

4. Device according to claims 2 or 3, characterized in that the electrodes (28, 38, 43) are made from copper and the tool body (11, 35, 36, 40) from metal.

5. Device according to one of the claims 2 to 4, characterized in that the electrodes (28, 38, 43) are guided in slots in the tool body (11, 35, 36, 40).

6. Device according to one of the claims 2 to 5, characterized in that the spacers (29, 37, 42) and the electrodes (28, 38, 43) are jointly infeedable.

7. Device according to one of the claims 2 to 5, characterized in that the spacers (29, 37, 42) and electrodes (28, 38, 43) are separately infeedable.

8. Device according to claims 6 or 7, characterized in that an electronically driveable stepping motor operable in two opposite directions is provided for infeeding purposes.

9. Device according to one of the claims 2 to 8, characterized in that in each case one spacer without gap is located on both sides of all the electrodes (38).

10. Device according to one of the claims 2 to 9, characterized in that in each case one electrode (43) without gap is arranged on both sides of all the spacers (41).

11. Device according to one of the claims 2 to 10, characterized in that the tool body (35) is constructed as a solid electrode with infeedable spacer (29).

12. Device according to one of the claims 2 to 11, characterized in that the length of the electrodes (28, 38, 43) and the spacers (29, 37, 42) approximately corresponds to the length of the bore to be machined.

13. Device according to one of the claims 2 to 12, characterized in that the spacers (29, 37, 42) have a fine-grained cutting layer of silicon or diamond grains.

14. Device according to one of the claims 2 to 13, characterized in that, besides the electrodes (28, 38, 43) and spacers (29, 37, 42), the tool body has honing strips.

## Revendications

1. Procédé pour usiner les surfaces, dans lequel le dégrossissage est suivi par un usinage par électroérosion et par un usinage fin avec honage, caractérisé en ce que, pour usiner les surfaces de glissement des cylindres, celles-ci sont usinées à l'aide d'un outil mis en rotation et présentant au moins une électrode (28, 38, 43) et au moins un écarteur (29, 37, 42), tandis que l'érosion s'effectue dans une zone étroite se déplaçant au-dessus de la surface à usiner, derrière laquelle se déplace l'écarteur (29, 37, 42) par-dessus la surface à usiner, cet écarteur frottant sur la surface.

2. Dispositif pour usiner des alésages cylindriques avec un corps d'outil (11, 35, 36, 40) pouvant être mis en rotation et être éventuellement animé d'un mouvement axial de va-et-vient, comportant un dispositif de connexion pour sa fixation sur une machine de honage usuelle et avec au moins une électrode (28, 38, 43), caractérisé en ce que l'électrode (25, 38, 43) se présente sous forme de barrette et peut être connectée à une source de tension pour créer des décharges d'étincelles, et que le corps d'outil (11, 35, 36, 40) comporte au moins un écarteur (29, 37, 42) qui est pourvu, au moins dans la zone de contact avec la surface à usiner, d'une couche d'isolation sous forme d'une barrette céramique (30, 39) qui provoque un usinage par frottement de la surface à usiner.

3. Dispositif selon la revendication 2, caractérisé en ce que le corps d'outil (11, 35, 36, 40) présente plusieurs électrodes (28, 38, 43) et plusieurs écarteurs (29, 37, 42) disposés parallèlement les uns aux autres et répartis régulièrement sur la périphérie.

4. Dispositif selon la revendication 2 ou 3, caractérisé en ce que les électrodes (28, 38, 43) sont réalisées en cuivre et que le corps d'outil (11, 35, 36, 40) est en métal.

5. Dispositif selon l'une des revendications 2 à 4, caractérisé en ce que les électrodes (28, 38, 43) sont guidées dans des rainures pratiquées dans le corps d'outil (11, 35, 36, 40).

6. Dispositif selon l'une des revendications 2 à 5, caractérisé en ce que les écarteurs (29, 37, 42) et les électrodes (28, 38, 43) peuvent être réglés ensemble.

7. Dispositif selon l'une des revendications 2 à 5, caractérisé en ce que les écarteurs (29, 37, 42) et les électrodes (28, 38, 43) peuvent être réglés séparément.

8. Dispositif selon la revendication 6 ou 7, caractérisé en ce qu'un moteur pas-à-pas pouvant être commandé électroniquement et être entraîné dans deux directions opposées est prévu pour assurer le réglage.

9. Dispositif selon l'une des revendications 2 à 8, caractérisé en ce qu'un écarteur est disposé sans intervalle sur les deux côtés de toutes les électrodes (38).

10. Dispositif selon l'une des revendications 2 à 9, caractérisé en ce qu'une électrode (43) est disposée sans intervalle sur les deux côtés de tous les écarteurs (41).

11. Dispositif selon l'une des revendications 2 à 10, caractérisé en ce que le corps d'outil (35) est constitué par une électrode pleine avec des écarteurs réglables (29).

12. Dispositif selon l'une des revendications 2 à 11, caractérisé en ce que la longueur des électrodes (28, 35, 43) et des écarteurs (29, 37, 42) correspond à peu près à la longueur de l'alésage à usiner.

13. Dispositif selon l'une des revendications 2 à 12, caractérisé en ce que les écarteurs (29, 37 42) comportent un revêtement tranchant à grains fins, constitué de grains de diamant ou de silicium.

14. Dispositif selon l'une des revendications 2 à 13, caractérisé en ce que le corps d'outil présente des barrettes de honage outre les électrodes (28, 38, 43) et les écarteurs (29, 37, 42).

## FIG. 1

## FIG. 2

FIG.3

FIG.4

FIG.5